# EUROPÄISCHE PATENTSCHRIFT

(11) **EP 1 373 002 B1**
(45) Veröffentlichungstag und Bekanntmachung des Hinweises auf die Patenterteilung: **21.06.2006**
(21) Anmeldenummer: 02727394.5
(22) Anmeldetag: 11.03.2002
(51) Int. Cl.: B60K 15/067, B60K 15/07

(54) **PERSONENKRAFTWAGEN MIT EINEM ZWISCHEN DEN FAHRZEUG-SITZEN ANGEORDNETEN KRAFTSTOFF-TANK**
PASSENGER VEHICLE COMPRISING A FUEL TANK LOCATED BETWEEN THE VEHICLE SEATS
VEHICULE AUTOMOBILE COMPRENANT UN RESERVOIR DE CARBURANT PLACE ENTRE LES SIEGES DU VEHICULE

(30) Priorität: 31.03.2001 DE 10116268
(43) Veröffentlichungstag der Anmeldung: 02.01.2004
(73) Patentinhaber: Bayerische Motoren Werke Aktiengesellschaft, 80809 München (DE)
(72) Erfinder: GREIL, Jürgen, 80801 München (DE)
(86) Internationale Anmeldenummer: PCT/EP2002/002649
(87) Internationale Veröffentlichungsnummer: WO 2002/078993

(56) Entgegenhaltungen:
- DD-A- 114 561
- DE-A- 19 841 331
- FR-A- 2 742 403
- US-A- 4 511 176

## Beschreibung

Die Erfindung betrifft einen Personenkraftwagen mit im Frontbereich angeordneten Antriebsaggregat, von welchem eine Antriebswelle zu den Fahrzeug-Hinterrädern führt, sowie mit einem zwischen den Fahrzeug-Sitzen angeordneten Kraftstoff-Tank, der sich in Fahrzeug-Längsrichtung erstreckt, wobei die Antriebswelle im wesentlichen seitlich des Kraftstoff-Tanks von vorne nach hinten verläuft. Zum technischen Umfeld wird neben der FR 2 742 403 A auf die DE 198 41 331 A1 verwiesen.

Üblicherweise ist der Kraftstofftank eines Personenkraftwagens im Fahrzeug-Heckbereich und dabei im wesentlichen vor oder über der FahrzeugHinterachse liegend angeordnet, da sich dieser Einbauort unter Sicherheits- und Bauraum-Aspekten als idealer Kompromiss herausgestellt hat. Dieser Einbauort wird heute auch bei den wenigen bekannten PKWs mit Flüssiggasantrieb gewählt, d.h. bei PKWs, die als Kraftstoff ein Flüssiggas, bspw. Wasserstoff, verwenden. Jedoch sollte das Tankvolumen von Flüssiggas-Tanks größer sein als dasjenige üblicher Benzin- oder Diesel-Tanks, um eine vergleichbare Reichweite des PKW's zwischen zwei Tankstops anbieten zu können.

Aus der o.g. DE 198 41 331 A1 ist es bekannt, den Kraftstoff-Tank in einem PKW oberhalb der zu den Fahrzeug-Hinterrädern führenden Antriebswelle in einer Erhöhung des üblichen sog. Mitteltunnels anzuordnen, um bspw. bei Cabriolets im Fahrzeug-Heckbereich zusätzlichen Raum für die Unterbringung des Verdecks zu schaffen, jedoch bietet auch diese bekannte Tank-Anordnung praktisch kein gegenüber der bisher üblichen Anordnung vergrößertes Tankvolumen. Die FR 2 742 403 A zeigt ein Chassis eines Fahrzeugs nach dem Oberbegriff des Anspruchs 1, jedoch in unüblicher Bauart, nämlich mit einem zentralen Trägerrahmen, der sich in Fahrzeugmitte von vorne nach hinten erstreckt und in dem verschiedene Bestandteile bzw. Aggregate angeordnet sind, so neben einem Gas-Tank zur Versorgung des Antriebsaggregats eine Antriebswelle vom vorne liegenden Antriebsaggregat zu den Fahrzeug-Hinterrädem.

Hiermit soll nun aufgezeigt werden, wie das Tankvolumen an einem PKW nach dem Oberbegriff des Anspruchs 1 weiter vergrößert werden kann (= Aufgabe der vorliegenden Erfindung).
Die Lösung dieser Aufgabe ist dadurch gekennzeichnet, dass der Kraftstoff-Tank in einem aus dem Bodenblech der Fahrzeug-Karosserie herausgearbeiteten Mitteltunnel angeordnet ist und diesen im wesentlichen ausfüllt, während die Antriebswelle seitlich der Fahrzeug-Mitten-Längsachse außerhalb des Mitteltunnels verläuft. Vorteilhafte Aus- und Weiterbildungen sind Inhalt der Unteransprüche. Dabei sei ausdrücklich darauf hingewiesen, dass das erfindungsgemäße Konzept selbstverständlich nicht auf Flüssiggas-Tanks beschränkt ist, sondern auch bei Tanks für übliche, aus Erdöl gewonnene Kraftstoffe angewendet werden kann.

Wenn - wie grundsätzlich bekannt - die vom vorne liegenden Antriebsaggregat zur PKW-Hinterachse führende Antriebswelle seitlich des in Fzg.-Längsrichtung ausgerichteten Tanks verläuft, so wird insbesondere nach unten, d.h. zur Fahrbahn hin ein erhebliches Maß von zusätzlichem Bauraum gewonnen, der dann für die Ausbildung des Kraftstoff-Tanks zur Verfügung steht. Insbesondere wird jedoch weiterer Bauraum für den Tank gewonnen, wenn ein an sich bekannter Mitteltunnel und in diesem der Kraftstoff-Tank vorgesehen wird. Damit und wenn abweichend von der bisherigen üblichen Bauweise die Antriebswelle demzufolge nicht mehr in der Fahrzeugmitte, sondern seitlich versetzt von vorne nach hinten verläuft, kann es zwar erforderlich werden, die Fahrzeugsitze geringfügig höher als bisher zu legen, doch ist dies unproblematisch, da bei einem PKW in der Höhe ausreichend Bauraum zur Verfügung steht. Quasi längsachsensymmetrisch kann dann eine Abgasanlage des als Brennkraftmaschine ausgebildeten Antriebsaggregates auf der der Antriebswelle gegenüberliegenden Seite des Kraftstoff-Tanks von vorne nach hinten verlaufen.

Um den zur Verfügung stehenden Bauraum in der Breite, d.h. in einer zur Fzg.-Fahrtrichtung senkrechten Ebene in Fzg.-Querrichtung bestmöglich auszunutzen und dabei ausreichende Sitzfreiheit zur Verfügung zu stellen, kann der Kraftstoff-Tank in seinem oberen Abschnitt schmäler ausgebildet sein als in seinem geodätisch weiter unten liegenden Abschnitt. Der sog. "obere Abschnitt" des Kraftstoff-Tanks befindet sich dabei direkt zwischen den nebeneinander im Fzg.-Innenraum angeordneten Sitzen, während der sog. "untere Abschnitt" im wesentlichen unterhalb der Fzg.-Sitze liegen kann. Damit kann der Kraftstoff-Tank einen im wesentlichen birnenförmigen Querschnitt besitzen, was insbesondere dann, wenn der Kraftstoff-Tank zur Aufnahme von Flüssiggas, insbesondere flüssigem Wasserstoff vorgesehen oder ausgebildet ist, unter Festigkeitsaspekten besonders vorteilhaft ist. Schließlich kann es erforderlich sein, an einem solchen Tank einen Innendruck von mehreren bar zuzulassen.

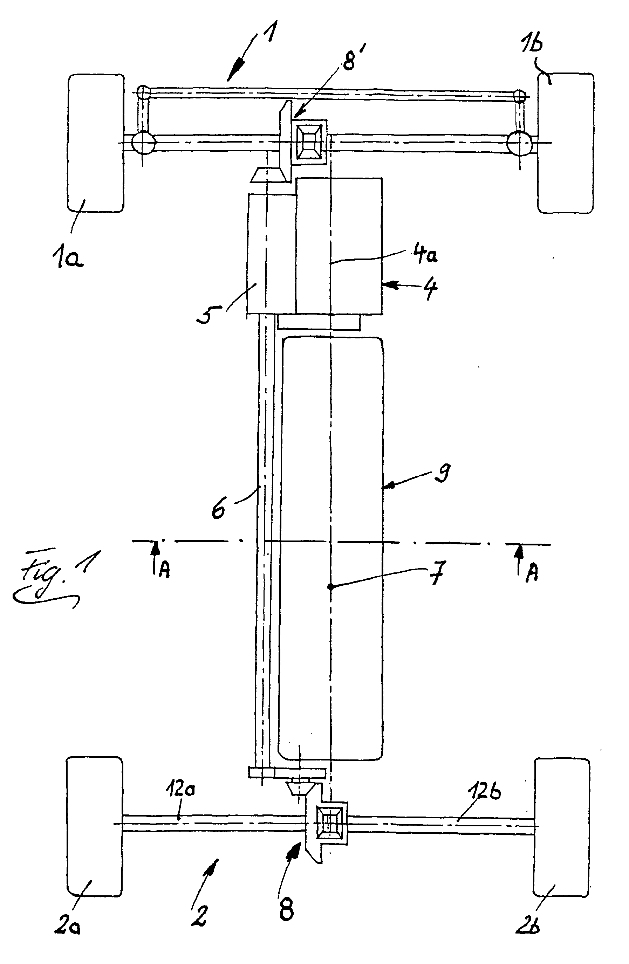

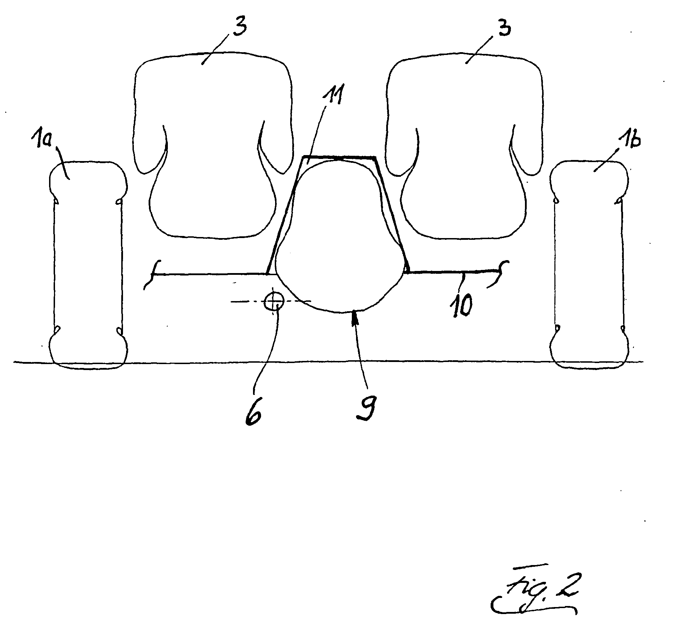

Vorgeschlagen wird weiterhin eine sowohl im Hinblick auf die Bauraumausnutzung als auch hinsichtlich der Übertragung des Drehmoments vom Fzg.-Antriebsaggregat zur Fzg.-Hinterachse vorteilhafte Anordnung eines zwischen dem Antriebsaggregat und der Hinterräder-Antriebswelle vorgesehenen Übersetzungs-Wechselgetriebes. Dies sowie weitere Merkmale und Vorteile geht/gehen auch aus der folgenden Beschreibung eines lediglich prinzipiell dargestellten bevorzugten Ausführungsbeispieles hervor, wobei die beigefügte Figur 1 die Aufsicht auf die Unterbau-Struktur eines erfindungsgemäßen PKW's zeigt, von dem in Figur 2 der Schnitt A-A aus Figur 1 dargestellt ist. Erfindungswesentlich können dabei sämtliche näher beschriebenen Merkmale sein.

Mit der Bezugsziffer 1 ist die Vorderachse und mit der Bezugsziffer 2 die Hinterachse eines Personenkraftwagens bezeichnet (vgl. Fig.1), in dessen Innenraum wie üblich zwei nebeneinander angeordnete vordere Sitze und eine dahinterliegende Rücksitzbank vorgesehen sind. Diese Fzg.-Sitze sind figürlich nicht dargestellt, jedoch erkennt man in Fig.2 stark abstrahiert zwei nebeneinander sitzende Fahrzeug-Insassen 3, die sich entweder auf den Vordersitzen oder auf der Rücksitzbank befinden können.

Zurückkommend auf Figur 1 erkennt man die beiden Vorderräder 1 a, 1b sowie die beiden Hinterräder 2a, 2b, die von einem im Fzg.-Frontbereich angeordneten Fzg.-Antriebsaggregat 4 angetrieben werden (können). Hierzu verläuft ausgehend von einem Übersetzungs-Wechselgetriebe 5, welches seitlich des Antriebsaggregates 4 angeordnet ist, eine Antriebswelle 6 in Fzg.-Längsrichtung (diese ist parallel zur Fzg.-Mitten-Längsachse 7) von vorne nach hinten zu einem Zwischengetriebe 8 mit integriertem Differential, von dem die Rad-Antriebswellen 12a bzw. 12b wie üblich zu den Hinterrädern 2a bzw. 2b führen.

Wie ersichtlich verläuft hier - abweichend vom üblichen bekannten Stand der Technik - die zur Hinterachse 2 führende Antriebswelle 6 nicht in der Fahrzeug-Mitte, sondern sie liegt um ein beträchtliches Maß seitlich der Fzg.-Mitten-Längsachse 7. Hierdurch entsteht ausreichender Bauraum, um einen Kraftstoff-Tank 9 (zur Versorgung des Antriebsaggregates 4) in dem weiterhin im wesentlichen wie üblich vorgesehenen (und aus dem Bodenblech 10 der Fzg.-Karosserie herausgearbeiteten) Mitteltunnel 11 anzuordnen (vgl. Fig.2). Wie Fig.1 zeigt, erstreckt sich dieser Kraftstoff-Tank 9 in Fzg.-Längsrichtung im wesentlichen von der Rückseite des Antriebsaggregates 4 bis hin zum Zwischengetriebe 8 im Bereich der Hinterachse 2.

In Figur 2 erkennt man, dass die Antriebswelle 6 nicht nur seitlich des Kraftstoff-Tanks 9 verläuft, sondern auch im wesentlichen nahe des unteren Abschnittes des Kraftstoff-Tanks 9. Auf der gegenüberliegenden (rechten) Seite kann eine (hier figürlich nicht dargestellte) Abgasanlage des Antriebsaggregates 4 symmetrisch zur Abtriebswelle 6 bezüglich der Fzg.-Mitten-Längsachse 7 von vorne nach hinten verlaufen. Aus Fig.2 wird weiterhin ersichtlich, dass der Kraftstoff-Tank 9 einen im wesentlichen birnenförmigen Querschnitt besitzt, mit einem schmäleren oberen Abschnitt sowie einem breiteren unteren Abschnitt.

Zurückkommend auf Fig.1 erkennt man, dass das Antriebsaggregat 4, das bspw. als Hubkolben-Brennkraftmaschine der Reihenbauart oder der V-Bauart ausgebildet ist, so im Motorraum des PKW's angeordnet ist, dass die lediglich durch ihre Achse 4a dargestellte Abtriebswelle des Antriebsaggregates 4 parallel zur Fzg.-Längsachse verläuft und hier sogar mit der Fzg.-Mitten-Längsachse 7 im wesentlichen zur Deckung kommt. Wenn dann die Hinterachs-Antriebswelle 6 wie geschildert neben dem zentral angeordneten Kraftstoff-Tank 9 außermittig verlaufen soll, ist es zur Minimierung von Zwischen-Übersetzungen und Wellenumlenkungen besonders vorteilhaft, wenn das Übersetzungs-Wechselgetriebe 5 seitlich des Antriebsaggregats 4 angeordnet ist. Im übrigen ermöglicht es diese Anordnung, auf besonders einfache Weise zusätzlich die Vorderräder 2a, 2b des PKW's anzutreiben, und zwar durch Anordnung eines Zwischengetriebes 8' mit integriertem Differential auf der der Antriebswelle 6 gegenüberliegenden Seite des Übersetzungs-Wechselgetriebes 5.

Mit der beschriebenen Anordnung des Kraftstoff-Tanks 9 sowie der daneben liegenden Hinterachs-Antriebswelle 6 wird an einem ansonsten üblichen PKW ein gegenüber der bisherigen Bauweise deutlich vergrößertes Tankvolumen zur Verfügung gestellt. Dies resultiert auch aus der vorgeschlagenen Gestaltung des Kraftstoff-Tanks 9, die bzw. deren Querschnitt im übrigen auch unter Festigkeitsaspekten äußerst vorteilhaft ist. Im übrigen können - auch zur Stabilitätserhöhung des Tanks 9 - im Tankinnenraum (figürlich nicht dargestellte) Schottbleche (in einer zur Fahrtrichtung senkrechten Ebene liegend) vorgesehen sein, wie überhaupt eine Vielzahl von Details insbesondere konstruktiver Art durchaus abweichend vom gezeigten Ausführungsbeispiel gestaltet sein kann, ohne den Inhalt der Patentansprüche zu verlassen.

## Patentansprüche

1. Personenkraftwagen mit im Frontbereich angeordneten Antriebsaggregat (4), von welchem eine Antriebswelle (6) zu den Fahrzeug-Hinterrädern (2a, 2b) führt, sowie mit einem zwischen den Fahrzeug-Sitzen angeordneten Kraftstoff-Tank (9), der sich in Fahrzeug-Längsrichtung erstreckt, wobei die Antriebswelle (6) im wesentlichen seitlich des Kraftstoff-Tanks (9) von vorne nach hinten verläuft,
**dadurch gekennzeichnet, dass** der Kraftstoff-Tank (9) in einem aus dem Bodenblech (10) der Fahrzeug-Karosserie herausgearbeiteten Mitteltunnel (11) angeordnet ist und diesen im wesentlichen ausfüllt, während die Antriebswelle (6) seitlich der Fahrzeug-Mitten-Längsachse (7) außerhalb des Mitteltunnels (11) verläuft.

2. Personenkraftwagen nach Anspruch 1,
**dadurch gekennzeichnet, dass** eine Abgasanlage des als Brennkraftmaschine ausgebildeten Antriebsaggregates (4) auf der der Antriebswelle (6) gegenüberliegenden Seite des Kraftstoff-Tanks (9) von vorne nach hinten verläuft.

3. Personenkraftwagen nach Anspruch 1 oder 2,
**dadurch gekennzeichnet, dass** der Kraftstoff-Tank (9) in seinem oberen Abschnitt schmäler ausgebildet ist als in seinem geodätisch weiter unten liegenden Abschnitt.

4. Personenkraftwagen nach Anspruch 3,
**dadurch gekennzeichnet, dass** der Kraftstoff-Tank (9) einen im wesentlichen birnenförmigen Querschnitt besitzt und zur Aufnahme von Flüssiggas, insbesondere flüssigem Wasserstoff ausgebildet ist.

5. Personenkraftwagen nach einem der vorangegangenen Ansprüche,
**dadurch gekennzeichnet, dass** die Abtriebswelle (4a) des Fahrzeug-Antriebsaggregates (4) in Fahrzeug-Längsrichtung verläuft und ein zwischen dem Antriebsaggregat (4) und der Antriebswelle (6) für die Hinterräder (2a, 2b) vorgesehenes Übersetzungs-Wechsefgetriebe (5) seitlich des Antriebsaggregates (4) angeordnet ist.

## Claims

1. A passenger car comprising a drive unit (4) which is arranged in the front region and from which a drive shaft (6) leads to the rear vehicle wheels (2a, 2b), and comprising a fuel tank (9), which is arranged between the vehicle seats and extends in the longitudinal vehicle direction, wherein the drive shaft (6) extends from the front to the back substantially to the side of the fuel tank (9), **characterised in that** the fuel tank (9) is arranged in a centre tunnel (11) fashioned out of the floor plate (10) of the vehicle body and substantially fills the tunnel, while the drive shaft (6) extends to the side of the central longitudinal axis (7) of the vehicle outside the centre tunnel (11).

2. A passenger car according to claim 1, **characterised in that** an exhaust system of the drive unit (4) configured as an internal combustion engine extends from the front to the back on the side of the fuel tank (9) opposing the drive shaft (6).

3. A passenger car according to claim 1 or 2, **characterised in that** the fuel tank (9) is narrower in its upper section than in its geodetically lower section.

4. A passenger car according to claim 3, **characterised in that** the fuel tank (9) has a substantially pear-shaped cross-section and is configured to receive liquefied gas, especially liquid hydrogen.

5. A passenger car according to any one of the preceding claims, **characterised in that** the output shaft (4a) of the vehicle drive unit (4) extends in the longitudinal vehicle direction and a manual transmission gearing (5) provided between the drive unit (4) and the drive shaft (6) for the rear wheels (2a, 2b) is arranged to the side of the drive unit (4).

## Revendications

1. Véhicule automobile comportant un ensemble moteur (4) dans la zone frontale et duquel un arbre d'entraînement (6) mène aux roues arrière (2a, 2b) du véhicule, ainsi qu'un réservoir de carburant (9) disposé entre les sièges du véhicule suivant la direction longitudinale de véhicule, l'arbre d'entraînement (6) s'étendant essentiellement d'avant en arrière à côté du réservoir de carburant (9),
**caractérisé en ce que**
le réservoir de carburant (9) est disposé dans un tunnel central (11), façonné à partir de la tôle de plancher (10) de la carrosserie du véhicule, qu'il remplit essentiellement celui-ci, tandis que l'arbre d'entraînement (6) s'étend à côté de l'axe longitudinal central (7) du véhicule à l'extérieur du tunnel central (11).

2. Véhicule automobile selon la revendication 1,
**caractérisé en ce qu'**
une installation de gaz d'échappement de l'ensemble moteur (4) configurée sous forme de moteur à combustion interne s'étend d'avant en arrière sur le côté du réservoir de carburant (9) opposé à l'arbre d'entraînement (6),

3. Véhicule automobile selon la revendication 1 ou 2,
**caractérisé en ce que**
le réservoir de carburant (9) est plus étroit dans sa section supérieure, que dans sa section située plus bas du point de vue géodésique.

4. Véhicule automobile selon la revendication 3
**caractérisé en ce que**
le réservoir de carburant (9) a une section transversale essentiellement en forme de poire et est configuré pour recevoir du gaz liquide, notamment de l'hydrogène liquide.

5. Véhicule automobile selon l'une des revendications précédentes,
**caractérisé en ce que**
l'arbre de sortie (4a) de l'ensemble moteur (4) du véhicule s'étend suivant la direction longitudinale du véhicule, et une boîte à vitesses (5), prévue pour les roues arrière (2a, 2b) est disposée entre l'ensemble moteur (4) et l'arbre d'entraînement (6).
